# EUROPÄISCHE PATENTSCHRIFT

(11) **EP 2 189 401 B1**
(45) Veröffentlichungstag und Bekanntmachung des Hinweises auf die Patenterteilung: **19.10.2011**
(21) Anmeldenummer: 09176471.2
(22) Anmeldetag: 19.11.2009
(51) Int. Cl.: B65G 57/08, B42C 11/00

(54) **Stapelvorrichtung zum Stapeln von Objekten**
Stacking device for stacking objects
Dispositif d'empilage destiné à empiler des objets

(30) Priorität: 19.11.2008 DE 102008057962
(43) Veröffentlichungstag der Anmeldung: 26.05.2010
(73) Patentinhaber: CeWe Color AG & Co. OHG, 26133 Oldenburg (DE)
(72) Erfinder: Reil, Rainer, 26209, Hatten (DE)
(74) Vertreter: Eisenführ, Speiser & Partner

(56) Entgegenhaltungen:
- EP-A1- 0 359 920
- DE-A1- 3 828 147
- US-A- 3 918 703

## Beschreibung

Die Erfindung bezieht sich auf eine Stapelvorrichtung, ein Stapelverfahren und ein Computerprogramm zum Stapeln von Objekten, insbesondere von Büchern.

Das US-Patent 3,918,703 offenbart eine Stapelvorrichtung gemäß dem Oberbegriff des Anspruchs 1 für dünne und relativ steife Karten, die auf einer Seitenkante stehend nacheinander zu einem Stapel geführt werden, wobei dort die Karten auf Grund der Schwerkraft seitlich auf den Stapel fallen.

Es ist bekannt, Bücher mittels eines Förderbandes zu einer Buchstapelmaschine zu bewegen und dort derart übereinander zu schieben, dass die übereinander geschobenen Bücher einen Stapel bilden, der dann beispielsweise für den Versand verpackt werden kann.

Diese Art der Buchstapelung hat den Nachteil, dass die Bücher beim Übereinanderschieben leicht beschädigt werden können.

Es ist daher eine Aufgabe der vorliegenden Erfindung, eine Stapelvorrichtung, ein Stapelverfahren und ein Computerprogram zum Stapeln von Objekten, insbesondere von Büchern, bereitzustellen, mit denen die Objekte während des Stapelns weniger leicht beschädigt werden.

Diese Aufgabe wird durch eine Stapelvorrichtung zum Stapeln von Objekten, insbesondere von Büchern, gelöst, wobei die Stapelvorrichtung aufweist:
- einen Stapeltisch zum Aufnehmen eines Stapels von Objekten,
- eine Objektablegeeinheit zum Ablegen eines auf einer Seitenkante stehenden Objekts auf den Stapeltisch,
- eine Objektbewegungseinheit zum Bewegen des Objektes zu der Objektablegeeinheit,
wobei die Objektablegeeinheit einen Ablegearm aufweist, auf dem das Objekt lagerbar ist, und wobei die Objektablegeeinheit so angepasst ist, dass der Ablegearm in vertikaler und insbesondere in horizontaler Richtung derart bewegbar ist, dass das auf der Seitenkante stehende Objekt zum Ablegen auf den Stapeltisch gekippt wird.

Eine derartige Stapelvorrichtung ermöglicht es, dass Bücher nacheinander zunächst auf einen leeren Stapeltisch und dann auf bereits auf dem Stapeltisch liegende Bücher durch eine Kippbewegung abgelegt werden, so dass sie im Wesentlichen nicht übereinander geschoben werden müssen. Oberflächen der Bücher reiben daher beim Stapeln gar nicht oder kaum gegeneinander, so dass die Wahrscheinlichkeit von Beschädigungen der Bücher während des Stapelns reduziert wird.

Die zu stapelnden Objekte sind bevorzugt Bücher, insbesondere Fotobücher. Ein Fotobuch besteht bevorzugt aus einem Innenteil, das einzelne Buchseiten umfasst, die bevorzugt Fotos zeigen, und aus einer Buchumhüllung, die bevorzugt aus Pappe hergestellt ist, die dicker ist als die Buchseiten und die bevorzugt ebenfalls Fotos aufweist.

Die Objektablegeeinheit ist angepasst, ein auf einer Seitenkante stehendes Objekt auf den Stapeltisch abzulegen. Dabei kann das Objekt, insbesondere das Buch, unmittelbar auf den Stapeltisch gelegt werden oder auf bereits auf dem Stapeltisch befindliche Objekte, um einen Stapel zu bilden.

Die Objektablegeeinheit ist bevorzugt so angepasst, dass das auf der Seitenkante stehende Objekt um eine Kippachse, die durch die Seitenkante definiert ist oder parallel zu der Seitenkante verläuft, gekippt wird. Das heißt, bevorzugt wird das auf der Seitenkante stehende Objekt, das bevorzugt ein Buch ist, über die Seitenkante, auf der das Objekt steht, auf den Stapeltisch gekippt, um das Objekt auf den Stapeltisch abzulegen.

Der Stapeltisch ist bevorzugt höhenverstellbar. Des Weiteren ist es bevorzugt, dass die Stapelvorrichtung einen Höhensensor zum Bestimmen der Stapelhöhe aufweist, wobei der Stapeltisch derart höhenverstellbar ist, dass, nachdem ein Objekt auf den Stapeltisch oder auf bereits auf dem Stapeltisch befindliche Objekten abgelegt worden ist, die Höhe der Oberkante des Stapels gleich der Höhe der Oberkante des Stapeltisches oder des oder auf bereits auf dem Stapeltisch befindliche Objekten abgelegt worden ist, die Höhe der Oberkante des Stapels gleich der Höhe der Oberkante des Stapeltisches oder des Stapels ist, auf den das Objekt abgelegt worden ist, bevor dieses Objekt abgelegt worden ist. Es ist weiter bevorzugt, dass der Höhensensor eine Lichtschranke aufweist, die so angeordnet ist, dass, wenn die Höhe der Oberkante des Stapels ungleich der Höhe der Oberkante des Stapeltisches oder des Stapels ist, auf den das Objekt abgelegt worden ist, bevor dieses Objekt abgelegt worden ist, die Lichtschranke unterbrochen ist und dass, wenn die Höhe der Oberkante des Stapels gleich der Höhe der Oberkante des Stapeltisches oder des Stapels ist, auf den das Objekt abgelegt worden ist, bevor dieses Objekt abgelegt worden ist, die Lichtschranke nicht unterbrochen ist und dass die Stapelvorrichtung so angepasst ist, dass, wenn die Lichtschranke unterbrochen ist, der Stapeltisch nach unten bewegt wird, bis die Lichtschranke nicht mehr unterbrochen ist. Dies ermöglicht es, dass die Oberkante des Stapeltisches bzw. die Oberkante des bereits auf dem Stapeltisch gebildeten Stapels jeweils zu der gleichen Höhenposition geführt wird, so dass die Ablagefläche, auf der das jeweilige Objekt abgelegt wird, immer auf der gleichen Höhe angeordnet ist. Dies führt dazu, dass nacheinander aufeinander gestapelte Objekte mittels des gleichen Bewegungsvorgangs oder ähnlicher Bewegungsvorgänge abgelegt werden können.

Es ist des Weiteren bevorzugt, dass der Stapeltisch eine Auflagefläche für den Stapel aufweist, die durch ein Laufband gebildet ist, um den Stapel aus der Stapelvorrichtung zu bewegen. Damit kann ein gebildeter Stapel aus der Stapelvorrichtung heraus bewegt werden, um dann beispielsweise weiter zu einer Verpackungsstation transportiert zu werden, in der der Stapel verpackt wird.

In einer bevorzugten Ausführungsform ist die Objektbewegungseinheit so angepasst, dass das Objekt auf einer Seitenkante stehend zu der Objektablegeeinheit bewegbar ist. Es ist des Weiteren bevorzugt, dass die Objektbewegungseinheit Führungselemente, insbesondere Führungsrollenelemente, aufweist, die derart angeordnet sind, dass das Objekt so führbar ist, dass es auf einer Seitenkante stehend zu der Objektablegeeinheit bewegbar ist. Zudem ist es bevorzugt, dass die Objektbewegungseinheit ein Laufband aufweist, auf dem die Seitenkante des Objekts anordbar ist, so dass das Objekt mittels des Laufbands auf der Seitenkante stehend und mittels der Führungselemente geführt zu der Objektablegeeinheit bewegbar ist. Das Objekt wird daher bereits auf der Seitenkante stehend zu der Objektablegeeinheit bewegt, so dass es nicht notwendig ist, das Objekt zunächst auf eine Seitenkante zu stellen, um es dann abzulegen.

Wenn die zu stapelnden Objekte Bücher sind, so ist die Seitenkante, auf der das jeweilige Buch steht, bevorzugt der Buchrücken.

Es kann vorgesehen sein, dass die Objektablegeeinheit ein Halteelement zum Halten des stehenden Objekts aufweist. Bevorzugt ist dabei, dass das Halteelement mindestens ein Rollenelement aufweist, wobei das Halteelement mit dem mindestens einen Rollenelement so angepasst ist, dass das zu der Objektablegeeinheit bewegte Objekt auf der Seitenkante stehend und anliegend an das mindestens eine Rollenelement in die Objektablegeeinheit bewegbar ist. Zudem kann vorgesehen sein, dass das Halteelement so angepasst ist, dass das Halteelement zwischen einer Haltestellung, in der das Objekt auf einer Seitenkante stehend haltbar ist, und einer Freigabestellung, in der das Objekt zum Ablegen freigebbar ist, verstellbar ist. Diese Merkmale ermöglichen es, dass ein Objekt auf einer Seitenkante stehend in die Objektablegeeinheit hinein bewegt werden kann, wobei während und bevorzugt zunächst auch nach dem Hineinbewegen das Objekt durch das Halteelement in aufrechter Stellung gehalten wird. Nachdem das Objekt in die Objektablegeeinheit hinein bewegt worden ist, kann das Objekt von dem Halteelement freigegeben werden, indem das Halteelement von der Haltestellung in die Freigabestellung verstellt wird, so dass das Objekt auf dem Stapeltisch bzw. auf bereits auf dem Stapeltisch befindlichen Objekten abgelegt werden kann.

Die Objektablegeeinheit weist einen Ablegearm auf, auf dem das Objekt lagerbar ist, wobei die Objektablegeeinheit so angepasst ist, dass der Ablegearm in vertikaler und insbesondere in horizontaler Richtung derart bewegbar ist, dass das Objekt auf den Stapeltisch mittels einer Kippbewegung des Objekts ablegbar ist. Hierbei ist es bevorzugt, dass der Ablegearm Rollenelemente aufweist, auf denen das Objekt während des Ablegens lagert. Dies ermöglicht es, mittels einer Bewegung des Ablagearms das Objekt auf den Stapeltisch abzulegen, wobei die Wahrscheinlichkeit einer Beschädigung der Objekte weiter reduziert wird.

Es ist des Weiteren bevorzugt, dass die Objektablegeeinheit einen Objektformatsensor zum Bestimmen eines Formats des Objekts aufweist, wobei die Objektablegeeinheit angepasst ist, den Ablegearm in Abhängigkeit von dem bestimmten Format zu bewegen. Es können unterschiedliche Formklassen definiert sein, wobei mit Hilfe des Objektformatsensors bestimmt werden kann, in welcher Formklasse sich das jeweilige Objekt befindet. Jeder Formatklasse kann zudem eine Ablegebewegung des Ablegearms zugeordnet sein, wobei die Objektablegeeinheit bevorzugt so gesteuert wird, dass der Ablegearm jeweils diejenige Ablegebewegung durchführt, die der Formatklasse zugeordnet ist, in der das Format des jeweiligen Objektes liegt. Das Format wird bevorzugt durch die Größenabmessungen des Objekts bestimmt. Wenn das Objekt beispielsweise ein Buch ist, können bestimmte DIN-Formate die jeweilige Formatklasse bestimmen. Auch kann die Länge einer Seitenkante zur Formatklassifizierung verwendet werden. Beispielsweise können eine ersten Seitenkante, eine zweite Seitenkante und/oder eine Buchdicke eines Buches zur Formatklassifizierung verwendet werden, wobei jeder Formatklasse bevorzugt Größenbereiche zugeordnet sind, beispielsweise Abmessungsbereiche der ersten Seitenkante, der zweiten Seitenkante und/oder des Buchrückens eines Buches, und ein Objekt in die jeweilige Formatklasse eingeteilt wird, wenn die entsprechenden Größen des Objekts in den dazugehörigen Bereichen der Formatklasse liegen.

Wenn das Objekt ein Buch ist, wird bevorzugt der Abstand zwischen dem Buchrücken, auf dem das Buch bevorzugt steht, und der Seitenkante des Buches, die dem Buchrücken gegenüberliegt, zur Formatklassifizierung verwendet. Insbesondere wird die Bewegung des Ablegearms so gesteuert, dass die horizontale Bewegung über einen längeren Bereich erfolgt, wenn die oben genannte Länge zwischen dem Buchrücken und der gegenüberliegenden Seitenkante größer ist. In einer bevorzugten Ausführungsform gibt es zwei unterschiedliche Formatklassen, wobei die Klasseneinteilung auf Grund der Länge zwischen dem Buchrücken und der gegenüberliegenden Seitenkante erfolgt.

Als Objektformatsensor wird bevorzugt mindestens eine Lichtschranke verwendet. Es ist beispielsweise bevorzugt, dass eine Lichtschranke in der Objektablegeeinheit derart angeordnet ist, dass, wenn das Objekt stehend gehalten wird, Objekte, die in einer ersten Formatklasse sind, die Lichtschranke nicht unterbrechen, und Objekte, die in einer anderen Formatklasse sind, die Lichtschranke unterbrechen. Auf diese Art kann einfach die Zuordnung der jeweiligen Objekte in die Formatklassen erfolgen, so dass in Abhängigkeit von der Formatklasse, in der das jeweilige Objekt einzuordnen ist, die Bewegung des Ablegearms, insbesondere die Länge der horizontalen und/oder vertikalen Wegstrecke, eingestellt werden kann. Die Länge des horizontalen und/oder vertikalen Weges des Ablegearms hängt also von der Formatklasse ab, in der das jeweilige Objekt einzuordnen ist.

In einer weiteren Ausführungsform kann auf die Einteilung in Formatklassen verzichtet werden und die Bewegung des Ablegearms kann kontinuierlich in Abhängigkeit von einer Abmessung des Objekts gesteuert werden. Beispielsweise kann die Länge der Horizontalbewegung des Ablegearms in Abhängigkeit von dem Abstand des Buchrückens zu der gegenüberliegenden Seitenkante gesteuert werden, so dass die Horizontalbewegung des Ablegearms umso länger ist, je größer der Abstand zwischen dem Buchrücken und der gegenüberliegenden Seitenkante ist.

Bevorzugt sind das Halteelement und der Ablagearm so angepasst, dass, wenn das Halteelement von der Haltestellung zu der Freigabestellung verstellt wird, der Ablegearm an dem Objekt anliegt, so dass das Objekt zunächst auf der Seitenkante stehend gehalten wird, auch nachdem das Halteelement in die Freigabeposition verstellt worden ist. Dann führt der Ablegearm eine Horizontal- und Vertikalbewegung derart durch, dass das Objekt mittels einer Kippbewegung des Objekts auf den Stapeltisch abgelegt wird, das heißt, der Ablegearm wird nach unten und von der Seitenkante, auf der das Objekt steht, weg bewegt.

Es ist des Weiteren bevorzugt, dass die Objektablegeeinheit einen Anschlag aufweist, der derart angeordnet ist, dass das Objekt in die Objektablegeeinheit führbar ist, bis das Objekt den Anschlag berührt. Zudem kann vorgesehen sein, dass die Stapelvorrichtung einen Sensor zum Detektieren, ob ein Objekt bis zum Anschlag in die Objektablegeeinheit geführt worden ist, aufweist. Dieser Anschlag ermöglicht es, dass die Objekte zunächst in eine Einführrichtung in die Objektablegeeinheit eingeführt werden, bis sie den Anschlag berühren, wonach sie um die Seitenkante, auf der sie stehen, gekippt und so auf den Stapeltisch ablegt werden, wobei bevorzugt die Kippachse der Kippbewegung parallel zu der Einführrichtung und parallel zu oder gleich der Seitenkante ist, auf der das Objekt steht. Der Anschlag ermöglicht es, dass alle Objekte des Stapels bezüglich der Seitenkante des Objektes, die den Anschlag berührt, bündig ausgerichtet sind. Das heißt, die Stapelvorrichtung kann Objekte unterschiedlicher Formate stapeln, wobei diese Objekte bezüglich dieser Seitenkante, die an dem Anschlag anliegt, ausgerichtet sind. Bevorzugt ist die Seitenkante, die an dem Anschlag anliegt, senkrecht angeordnet zu der Seitenkante, auf der das Objekt steht.

Es ist des Weiteren bevorzugt, dass die Objektablegeeinheit ein Schiebeelement zum Schieben des abgelegten Objekts auf den Stapeltisch aufweist, wobei das Schiebeelement an der Seitenkante, auf der das Objekt stand, anlegbar ist. Dieses Schiebeelement ermöglicht es, dass die Objekte bezüglich der Seitenkante, auf der die Objekte standen, in dem Stapeln ausgerichtet sind, insbesondere da das Schiebelement jedes Objekt bevorzugt bis zur gleichen Position schiebt. Diese Schiebebewegung ist eine Schiebebewegung, die im Vergleich zu Schiebebewegungen des Stands der Technik, bei denen ein Buch zum Stapeln auf bereits gestapelte Bücher vollständig geschoben wird, relativ gering, da das erfindungsgemäße Schiebeelement nur das bereits abgelegte Objekt leicht verschiebt, um eine Ausrichtung der Objekte bezüglich der Seitenkante zu erzeugen, auf der die Objekte standen.

Es ist des Weiteren bevorzugt, dass die Objektablegeeinheit ein Laufband aufweist, dass das Objekt in die Objektablegeeinheit bewegt. Dies ermöglicht es, dass das Objekt mittels des Laufbandes, das beispielsweise ein Zahnriemenantrieb ist, in die Objektablegeeinheit bewegt bzw. gezogen werden kann. Während das Objekt in die Objektablegeeinheit bewegt bzw. gezogen wird, befindet sich das Halteelement bevorzugt in der Haltestellung, so dass das Objekt aufrechtstehend gehalten durch das Halteelement mittels des Laufbandes in die Objektablegeeinheit gezogen werden kann, bevorzugt bis das Objekt an dem Anschlag anliegt.

Es ist des Weiteren bevorzugt, dass die Objektbewegungseinheit derart angepasst ist, dass ein Buch von einer Buchfertigungseinheit zu der Objektablegeeinheit transportierbar ist. Dies ermöglicht es, die Stapelvorrichtung mit einer Buchfertigungseinheit zu verbinden, so dass gefertigte Bücher automatisch gestapelt werden können.

Die Buchfertigungseinheit ist bevorzugt so ausgebildet, dass ein Buchinnenteil, das Buchseiten umfasst, die bevorzugt Fotos aufweisen, in die Buchfertigungseinheit eingeführt wird, in der das Buchinnenteil aufrechtgestellt wird, so dass der Buchrücken des Buchinnenteils nach oben zeigt. Die Außenseiten des Buchinnenteils werden mit einem Klebstoff versehen und dann wird von oben die Buchumhüllung auf das aufrechtstehende Buchinnenteil gesetzt und auf die Klebeflächen des Buchinnenteils gedrückt. Bevorzugt wird das derart gefertigte Buch gedreht, so dass es auf dem Buchrücken steht und mit Hilfe der Objektbewegungseinheit aufrechtstehend zu der Objektablegeeinheit bewegt wird.

In einer anderen Ausführungsform ist die Buchfertigungseinheit so ausgebildet, dass ein Buchinnenteil, das Buchseiten umfasst, die bevorzugt Fotos aufweisen, in die Buchfertigungseinheit eingeführt wird, in der das Buchinnenteil aufrechtgestellt wird, so dass der Buchrücken des Buchinnenteils nach unten zeigt, beispielsweise indem das Buchinnenteil aufgehängt wird. Die Außenseiten des Buchinnenteils werden mit einem Klebstoff versehen und dann wird von unten die Buchumhüllung auf das aufrechtstehende Buchinnenteil gesetzt und auf die Klebeflächen des Buchinnenteils gedrückt. Dies hat den Vorteil, dass es nicht notwendig ist, dass gefertigte Buch so zu drehen, dass es auf dem Buchrücken steht, da es bereits auf dem Buchrücken stehend gefertigt wird.

Es ist des Weiteren bevorzugt, dass die Stapelvorrichtung eine Stapelbewegungseinheit aufweist, die so angepasst ist, dass sie einen Stapel von dem Stapeltisch weg bewegt, wenn eine vorgegebene Stapelhöhe erreicht ist. Es ist des Weiteren bevorzugt, dass die Stapelbewegungseinheit ein Laufband aufweist. Dies ermöglicht es, einen fertiggestellten Stapel von der Stapelvorrichtung weg, beispielsweise, zu einer Verpackungseinheit zu bewegen.

Die Erfindung betrifft des Weiteren eine Buchfertigungs- und -stapelvorrichtung mit einer Stapelvorrichtung nach Anspruch 1, die bevorzugt eine Verpackungseinheit zum Verpacken des Stapels aufweist.

Die oben genannte Aufgabe wird des Weiteren durch ein Stapelverfahren zum Stapeln von Objekten, insbesondere von Büchern, gelöst, wobei das Stapelverfahren folgenden Schritt aufweist:
- Bewegen eines Objekts zu einer Objektablegeeinheit,
   wobei das Stapelverfahren zudem folgende Schritte aufweist:
- Lagern des Objekts, auf einer Seitenkante stehend, auf einem Ablegearm der Objektablegeeinheit,
- Bewegen des Ablegearms in vertikaler und insbesondere in horizontaler Richtung derart, dass das auf der Seitenkante stehende Objekt zum Ablegen auf einen Stapeltisch gekippt wird.

Die oben genannte Aufgabe wird des Weiteren durch ein Computerprogramm zum Stapeln von Objekten gelöst, wobei das Computerprogramm Programmcodemittel aufweist, die angepasst sind, eine Stapelvorrichtung gemäß Anspruch 1 derart zu steuern, dass das Stapelverfahren gemäß Anspruch 16 durchgeführt wird, wenn das Computerprogramm auf einem Computer durchgeführt wird, der die Stapelvorrichtung steuert.

Es sollte verstanden werden, dass die Stapelvorrichtung nach Anspruch 1, die Buchfertigungs- und -stapelvorrichtung nach Anspruch 15, das Stapelverfahren nach Anspruch 16 und das Computerprogramm nach Anspruch 17 ähnliche und/oder identische bevorzugte Ausführungsformen aufweisen, wie sie insbesondere in den abhängigen Ansprüchen definiert sind.

Im Folgenden werden Ausführungsformen der Erfindung unter Bezugnahme auf folgende Figuren beschrieben, wobei
- Fig. 1: schematisch und exemplarisch eine Seitensicht einer Stapelvorrichtung mit einer Stapelbewegungseinheit und einer Verpackungseinheit zeigt,
- Fig. 2: schematisch und exemplarisch eine Schrägdraufsicht auf einen Teil einer Objektbewegungseinheit zeigt,
- Fig. 3 bis Fig. 6: schematisch und exemplarisch eine Objektablegeeinheit in verschiedenen Zuständen zeigen,
- Fig. 7: schematisch und exemplarisch eine Seitenansicht auf die Objektablegeeinheit zeigt,
- Fig. 8: eine schematische und exemplarische Draufsicht auf die Stapelvorrichtung mit einer Stapelbewegungseinheit und einer Verpackungseinheit zeigt,
- Fig. 9: schematisch und exemplarisch einen Teil der Objektablegeeinheit zeigt und
- Fig. 10: ein Flussdiagramm zeigt, das eine Ausführungsform eines Stapelverfahrens illustriert.

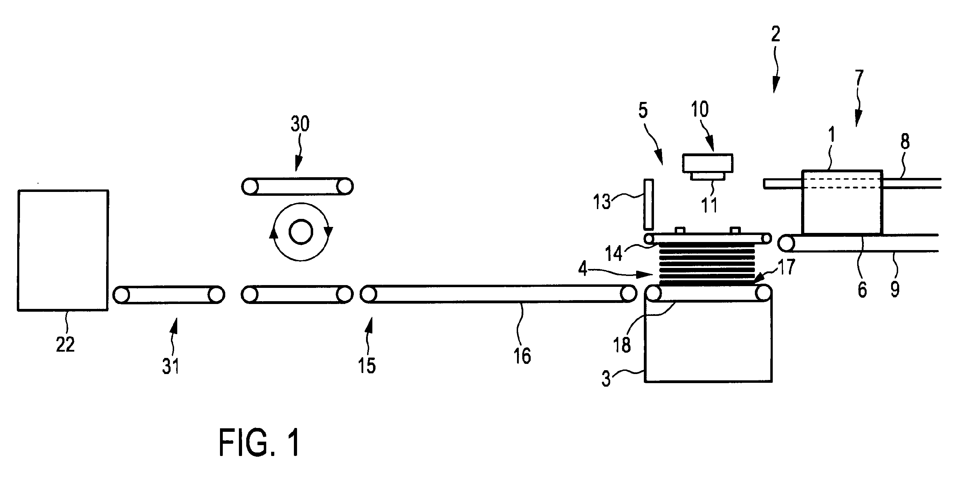

Fig. 1 zeigt schematisch und exemplarisch eine Ausführungsform einer Stapelvorrichtung 2 mit einer Stapelbewegungseinheit 15 zum Bewegen eines Stapels 4 zu einer Verpackungseinheit 22 zum Verpacken des Stapels 4.

In diesem Ausführungsbeispiel ist die Stapelvorrichtung 2 ausgebildet, Bücher 1, insbesondere Fotobücher, zu stapeln. Die Stapelvorrichtung 2 umfasst einen Stapeltisch 3 zum Aufnehmen eines Stapels 4 von Büchern 1. Des Weiteren weist die Stapelvorrichtung 2 eine Objektablegeeinheit 5 zum Ablegen eines auf einer Seitenkante 6 stehenden Buches 1 auf den Stapeltisch 3 auf. Dabei ist die Objektablegeeinheit 5 so angepasst, dass das Buch 1 durch eine Kippbewegung um eine Kippachse, die im Wesentlichen durch die Seitenkante 6, auf der das Buch 1 steht, definiert oder parallel zu dieser ist auf den Stapeltisch 3, insbesondere auf Büchern, die bereits auf dem Stapeltisch 3 liegen, ablegbar ist. Des Weiteren umfasst die Stapelvorrichtung 2 eine Objektbewegungseinheit 7 zum Bewegen des Buches 1 zu der Objektablegeeinheit 5.

Der Stapeltisch 3 ist höhenverstellbar, so dass eine Auflagefläche 17 des Stapeltisches 3 entsprechend einer Buchdicke eines abgelegten Buches gesenkt werden kann, so dass vor dem Ablegen eines nachfolgenden Buches die oberste Fläche des Stapels bzw. des Stapeltisches die gleiche Höhe aufweist, wie vor dem Ablegen des aktuell obersten Buches des Stapels. Auf diese Art und Weise können nachfolgende Bücher jeweils über eine vorgegebene Buchkantenhöhe bzw. Stapeltischhöhe, wenn noch kein Buch auf dem Stapeltisch liegt, auf das zuvor abgelegte Buch abgelegt werden.

Der Stapeltisch 3 kann dabei so angepasst sein, dass unmittelbar vor dem Kippvorgang die oberste Kante des aktuellen Stapels bzw. die Auflagefläche des Stapeltisches 3, wenn noch kein Buch auf der Auflagefläche 17 abgelegt ist, die gleiche Höhe aufweist, wie die Seitenkante des Buches, das auf den Stapeltisch abzulegen ist. In einer anderen Ausführungsform kann die oberste Kante des aktuellen Stapels bzw. die Auflagefläche 17 des Stapeltisches, wenn noch kein Buch auf dem Stapeltisch 3 abgelegt ist, höher sein als die Seitenkante des Buches, auf dem das abzulegende Buch unmittelbar vor dem Kippvorgang steht, so dass das abzulegende Buch über die höher stehende Kante des obersten Buches des bereits bestehenden Stapels bzw. der Auflagefläche 17 der Stapelmaschine 3, wenn noch kein Buch auf der Auflagefläche 17 vorhanden ist, auf den Stapeltisch 3 gekippt werden. Dieser Höhenunterschied zwischen der Seitenkante des stehenden abzulegenden Buches und der obersten Kante des bereits bestehenden Stapels bzw. der Auflagefläche des Stapeltisches liegt bevorzugt ein einem Bereich von 0 bis 5 cm, weiter bevorzugt in einem Bereich vom 0 bis 3 cm, weiter bevorzugt in einem Bereich vom 0 bis 2 cm und weiter bevorzugt in einem Bereich vom 0 bis 1 cm.

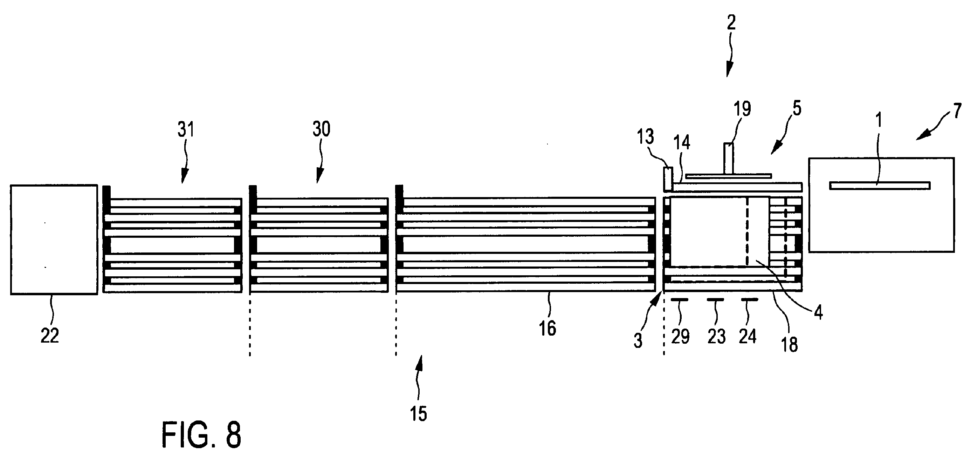

Die Stapelvorrichtung 2 weist des Weiteren bevorzugt einen Höhensensor 24 zum Bestimmen der Stapelhöhe auf, der in Fig. 8, die eine Draufsicht auf eine schematische und exemplarische Darstellung der in Fig. 1 gezeigten Vorrichtung zeigt, schematisch dargestellt ist. Der Stapeltisch 3 ist bevorzugt derart höhenverstellbar, dass nachdem ein Buch 1 auf dem Stapeltisch oder auch bereits auf dem Stapeltisch 3 befindlichen Objekten abgelegt worden ist, die Höhe der Oberkante des Stapels 4 gleich die Höhe der Oberkante des Stapeltisches oder des Stapels 4 ist, auf den das Buch 1 abgelegt worden ist, bevor dieses Buch abgelegt worden ist. Der Höhensensor ist in diesem Ausführungsbeispiel eine Lichtschranke 24, die so angeordnet ist, dass, wenn die Höhe der Oberkante des Stapels ungleich der Höhe der Oberkante des Stapeltisches 3 oder des Stapels 4 ist, auf den das Buch abgelegt worden ist, bevor dieses Buch 1 abgelegt worden ist, die Lichtschranke 24 unterbrochen ist und dass, wenn die Höhe der Oberkante des Stapels gleich der Höhe der Oberkante des Stapeltisches 3 oder des Stapels 4 ist, auf den das Buch 1 abgelegt worden ist, bevor dieses Buch ablegt worden ist, die Lichtschranke 24 nicht unterbrochen ist.

Die Stapelvorrichtung 2 ist in dieser Ausführungsform so angepasst, dass, wenn die Lichtschranke 24 unterbrochen ist, der Stapeltisch 3 nach unten bewegt wird, bis die Lichtschranke 24 nicht mehr unterbrochen ist.

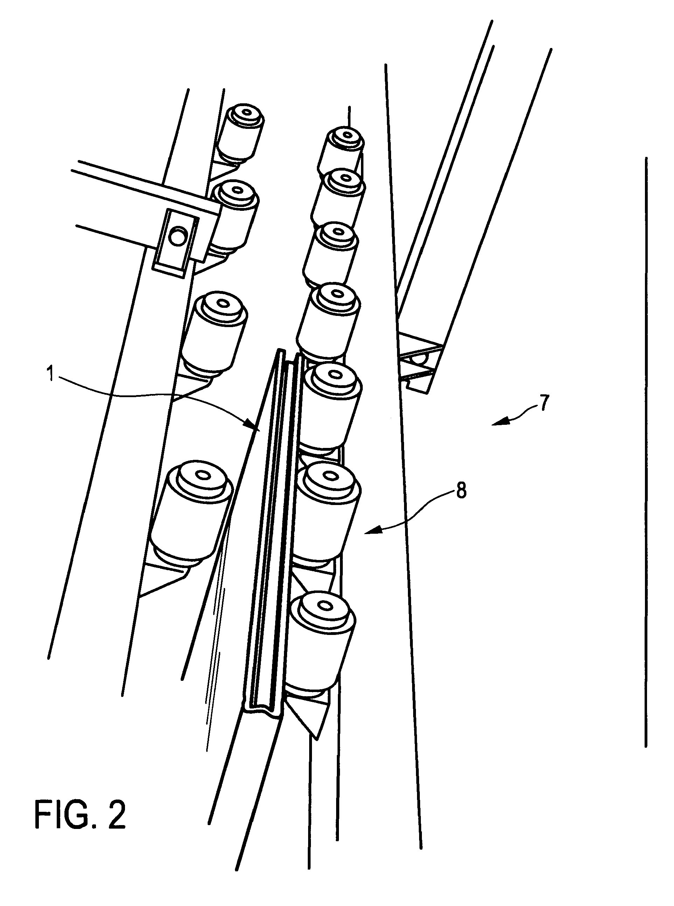

Die Objektbewegungseinheit 7 ist so angepasst, dass das Buch 1 auf einer Seitenkante 6 stehend zu der Objektablegeeinheit 5 bewegbar ist. Die Objektbewegungseinheit 7 weist Führungselemente 8 auf, die in dieser Ausführungsform Führungsrollenelemente sind und die derart angeordnet sind, dass das Buch 1 so führbar ist, dass es auf einer Seitenkante 6 stehend zu der Objektablegeeinheit bewegbar ist. Die Objektbewegungseinheit 7 umfasst des Weiteren ein Laufband 9, auf dem die Seitenkante 6 des Buches 1 anordbar ist, so dass das Buch 1 mittels des Laufbands 9 auf der Seitenkante 6 stehend und mittels der Führungselement 8 geführt zu der Objektablegeeinheit 5 bewegbar ist. Eine schematische und beispielhafte Schrägdraufsicht auf einen Teil einer Ausführungsform einer Objektbewegungseinheit 7, die insbesondere die Führungselemente mit den Führungsrollen 8 zeigt, ist in Fig. 2 dargestellt.

Die Objektbewegungseinheit 7 ist bevorzugt angepasst, um ein in einer Buchfertigungseinheit gefertigtes Buch zu der Objektablegeeinheit 5 zu transportieren. Dabei kann die Objektbewegungseinheit 7 auch als ein Teil der Buchfertigungseinheit bzw. der Buchfertigungsstraße aufgefasst werden. Die Buchfertigungseinheit ist bevorzugt eine Buchfertigungseinheit der Kolbus GmbH & Co. KG.

Die Buchfertigungseinheit ist, wie oben bereits erwähnt, bevorzugt so ausgestaltet, dass ein Buchinnenteil mit dem Buchrücken nach oben aufrechtstehend gehalten wird, die Buchaußenseiten mit einem Klebstoff versehen werden und dann von oben eine Buchumhüllung auf das Buchinnenteil gesetzt wird, wobei von außen die Seitenflächen des Buchinnenteils und die Innenflächen der Buchumhüllung zusammengedrückt werden, um diese miteinander zu verkleben. Um zu gewährleisten, dass jeweils zusammengehörige Buchinnenteile und Buchumhüllungen verklebt werden, weisen die Buchinnenteile und die Buchumhüllungen jeweils Markierungen auf, die vor dem Klebevorgang detektiert werden, wobei ein Buchinnenteil und eine Buchumhüllung nur miteinander verklebt werden, wenn die Markierung auf dem Buchinnenteil und die Markierung auf der Buchumhüllung sich entsprechen, insbesondere, wenn diese Markierungen teilweise oder vollständig gleich sind. Die Markierungen sind bevorzugt Strichcodes.

Die Auflagefläche 17 für den Stapel 4 des Stapeltisches 3 ist durch ein Laufband 18 gebildet, um den Stapel 4 aus der Stapelvorrichtung 2 zu bewegen. Die Stapelvorrichtung 2 ist bevorzugt so angepasst, dass der Stapel 4 mittels des Laufbandes 18, das auch als Transportriemen bezeichnet werden kann, aus der Stapelvorrichtung 2 bewegt wird, wenn der Stapel ein vorgebbare Maximalhöhe erreicht hat. Nachdem ein Stapel aus der Stapelvorrichtung 2 bewegt worden ist, wird der Stapeltisch wieder in eine Grundstellung gefahren, in der die Auflagefläche 17 des Stapeltisches 3 mindestens die gleiche Höhe aufweist, wie eine Seitenkante 6 eines abzulegenden Buches, das sich in der Objektablegeeinheit 5 befindet.

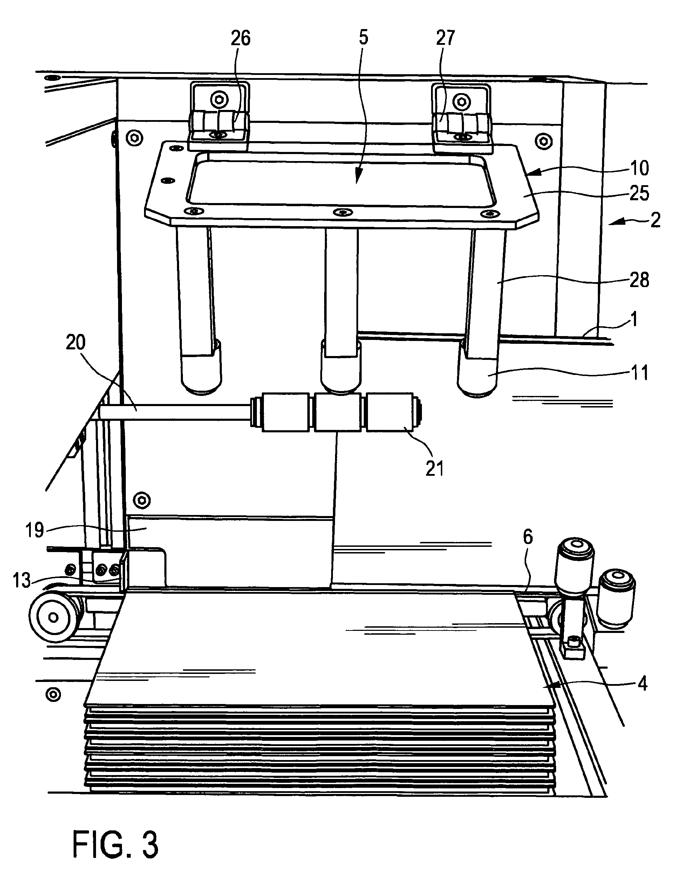

Die Objektablegeeinheit 5 weist ein Halteelement 10 zum Halten des stehenden Buches 1 auf. Das Halteelement 10 umfasst mindestens ein Rollenelement 11, in dieser Ausführungsform drei Rollenelemente 11, wobei das Halteelement 10 mit den Rollenelementen 11 so angepasst ist, dass zu der Objektablegeeinheit 5 bewegte Objektbücher 1 auf der Seitenkante 6 stehend und anliegend an mindestens ein Rollenelement 11 in die Objektablegeeinheit 5 bewegbar sind. Elemente der Objektablegeeinheit 5 sind detailierter in den schematischen und exemplarischen Figuren 3 bis 6 gezeigt.

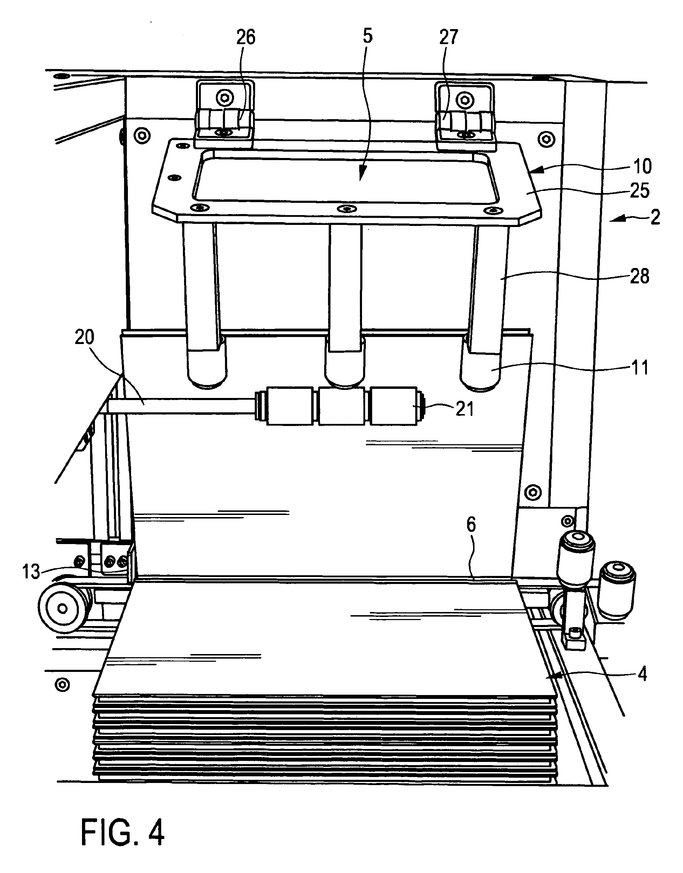

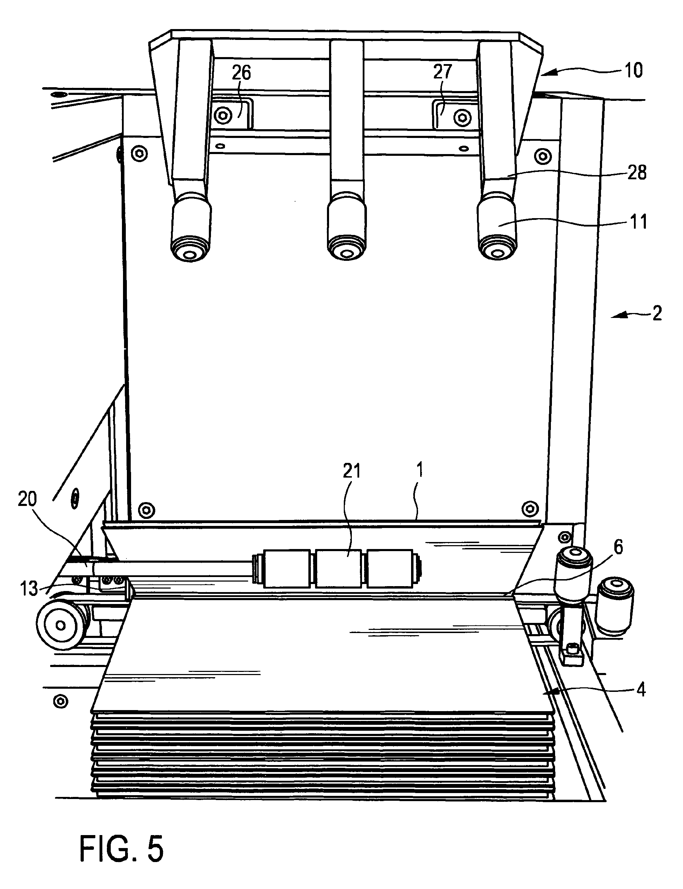

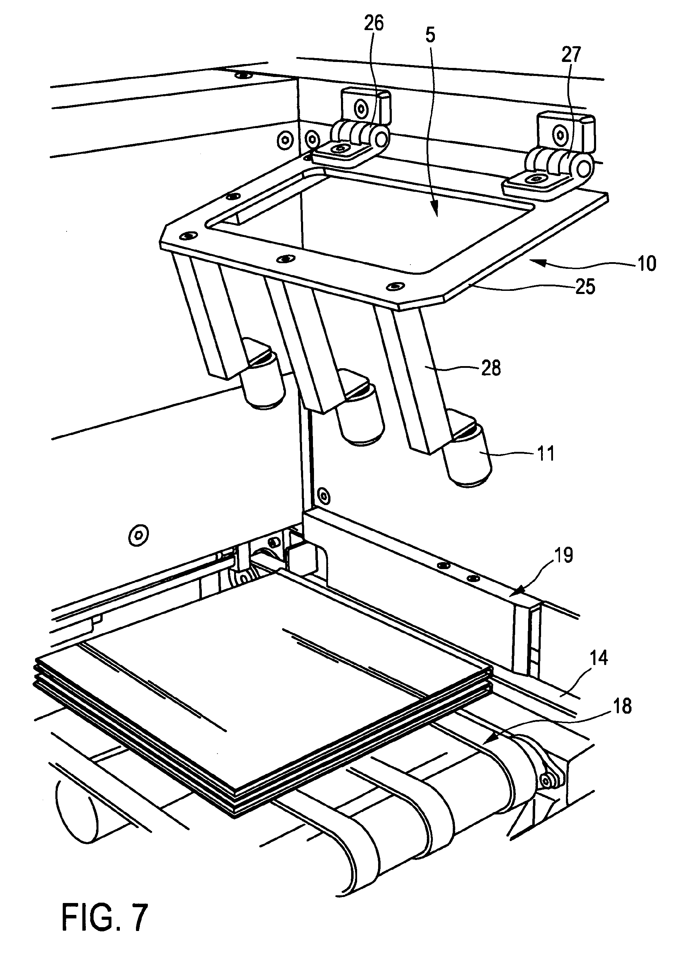

In den Figuren 3 bis 6 ist zu erkennen, dass das Halteelement 10 einen im Wesentlichen O-förmigen Rahmen 25 aufweist, der mittels der Schwenkelemente 26, 27 schwenkbar gehalten ist. Dies ermöglicht es, das Haltelement 10 zwischen einer Haltestellung, in der das Buch 1 auf einer Seitenkante 6 stehend haltbar ist, und einer Freigabestellung, in der das Buch zum Ablegen freigebbar ist, zu verstellen. Hierzu weist die Objektablegeeinheit 5 bevorzugt eine Halteelementbewegungseinheit auf, die in den Figuren nicht näher dargestellt ist und die so angepasst ist, dass sie das Halteelement von einer Haltestellung, die beispielsweise in den Figuren 3 und 4 gezeigt ist, und einer Freigabestellung, die beispielsweise in Fig. 5 gezeigt ist, und in umgekehrter Richtung verstellt. Die Halteelementbewegungseinheit umfasst beispielsweise einen motorischen Antrieb wie einen Elektromotor. Die Objektablegeeinheit 5 ist des Weiteren bevorzugt so angepasst, dass das Halteelement 10 in der jeweiligen Stellung gehalten werden kann. Von dem O-förmigen Rahmen 25 gehen drei längliche Abschnitte 28 aus, die schräg nach unten orientiert sind und an deren untersten Ende die Rollenelemente 11 angeordnet sind. Die bevorzugte Orientierung des Halteelements 10, insbesondere des Rahmens 25 mit den länglichen Abschnitten 28 und den Rollenelementen 11, lässt sich der Fig. 7 entnehmen.

Die Objektablegeeinheit 5 weist des Weiteren einen Ablegearm 20 auf, auf dem das Buch 1 lagerbar ist, wobei die Objektablegeeinheit 5 so angepasst ist, dass der Ablegearm 20 in vertikaler und horizontaler Richtung derart bewegbar ist, dass das Buch 1 auf den Stapeltisch 3 durch eine Kippbewegung des Buches ablegbar ist. Der Ablegearm 20 weist Rollenelemente 21 auf, auf denen das Buch 1 während des Ablegens lagert. Der Ablegearm 20 ist mit einem XY-Tisch verbunden, wobei bevorzugt mittels Lichtschranken die jeweilige Position des Ablegearms 20 detektiert wird und der XY-Tisch entsprechend gesteuert wird, so dass eine gewünschte Bewegung des Armes erzeugt wird.

Die Objektablegeeinheit 5 weist des Weiteren einen Objektformatsensor zum Bestimmen eines Formats des Buches auf. Die Objektablegeeinheit 5 ist dabei so angepasst, dass der Ablegearm 20 in Abhängigkeit von dem bestimmten Format bewegt wird. In diesem Ausführungsbeispiel ist der Objektformatsensor eine Lichtschranke 23, die in Fig. 8 lediglich schematisch angedeutet und unterbrochen ist, wenn der Abstand zwischen Buchrücken und gegenüberliegender Seitenkante des Buches eine bestimmte Länge überschreitet und die nicht unterbrochen ist, wenn dieser Abstand die vorgegebene Länge nicht überschreitet. Das heißt, in Abhängigkeit von dem Abstand zwischen einem Buchrücken und der gegenüberliegenden Seitenkante werden in diesem Ausführungsbeispiel die Bücher in zwei Formatklassen eingeteilt, wobei der Ablegearm 20 in Abhängigkeit von der jeweiligen Formatklasse gesteuert wird. Beispielsweise kann die horizontale Wegstrecke des Ablegearms 20 länger sein, wenn das abzulegende Buch in einer Formatklasse mit einem längeren Abstand zwischen Buchrücken und gegenüberliegender Seiten liegt. Zudem könnte in dieser Situation auch die vertikale Wegstrecke des Ablegearms 20 länger sein.

Die Objektablegeeinheit 5 weist des Weiteren einen Anschlag 13 auf, der derart angeordnet ist, dass das jeweilige Buch 1 in die Objektablegeeinheit 5 führbar ist, bis das Objekt 1 den Anschlag berührt. Des Weiteren weist die Objektablegeeinheit in dieser Ausführungsform einen Sensor zum Detektieren, ob ein Buch bis zum Anschlag 13 in die Objektablegeeinheit 5 geführt worden ist, auf. Dieser Sensor 29 ist schematisch in Fig. 8 dargestellt. Die Stapelvorrichtung 2 ist bevorzugt so ausgebildet, dass der Ablegevorgang startet, nachdem der Sensor 29 detektiert hat, dass ein Buch 1 bis zum Anschlag 13 in die Objektablegeeinheit 5 geführt worden ist. Der Sensor 29 ist in diesem Ausführungsbeispiel eine Lichtschranke, die durch ein in die Objektablegeeinheit 5 eingeführtes Buch 1 unterbrochen ist, wenn das Buch 1 bis zum Anschlag 13 in die Objektablegeeinheit 5 eingeführt worden ist.

Die Objektablegeeinheit 5 umfasst des Weiteren ein Schiebeelement 19, das beispielsweise in Fig. 8 dargestellt ist, zum Schieben des abgelegten Buches 1 auf den Stapeltisch 3, wobei das Schiebeelement 19 an der Seitenkante 6, auf der das Buch stand, anlegbar ist. Die Anlagefläche des Schiebeelementes 19 weist bevorzugt eine Höhe auf, die größer ist als eine Buchdicke. Insbesondere weist die Anlagefläche des Schiebeelementes 19 eine Höhe in einem Bereich von 0 bis 10 cm, weiter bevorzugt in einem Bereich von 2 bis 8 cm, weiter bevorzugt in einem Bereich von 4 bis 6 cm und bevorzugt und eine Höhe von 5 cm auf. Das Schiebeelement 19 schiebt das zuletzt ablegte Buch etwas in Richtung des Stapels so, dass die Bücher des Stapels 4 bezüglich der Seitenkante 6, auf der sie vor dem Ablegen standen, bündig ausgerichtet sind. Zudem sind die Bücher des Stapels 4 bezogen auf die Seitenkante, die während des Ablegens an dem Anschlag 13 anlag, bündig ausgerichtet. Die Stapelvorrichtung 2 ermöglicht es daher, die Bücher des Stapels 4 bezüglich zweier Seitenkanten bündig auszurichten, insbesondere auch dann, wenn diese Bücher unterschiedliche Formate, insbesondere unterschiedliche Abmessungen, aufweisen.

Die Objektablegeeinheit 5 umfasst des Weiteren ein Laufband 14, das das Buch 1 in die Objektablegeeinheit 5 bewegt und das bevorzugt unmittelbar neben der Auflagefläche des Stapeltisches angeordnet ist. Das Laufband 14 ist so angeordnet, dass es die Seitenkante 6 des Buches 1 erfasst, wenn das Buch 1 von der Objektbewegungseinheit 7 zu der Objektablegeeinheit 5 bewegt worden ist. Das Laufband 14 setzt sich dann in Bewegung und bewegt das Buch 1 in die Objektablegeeinheit 5 hinein, bis das Buch 1 den Anschlag 13 berührt. Sobald das Buch 1 den Anschlag 13 berührt und dies Mittels des Sensors 29 detektiert wird, stoppt das Laufband 14. Dann wird, wie oben bereits erwähnt, der Ablegevorgang durchgeführt, um das Buch 1 auf den Stapeltisch 3 bzw. einen dort bereits befindlichen Stapel zu legen.

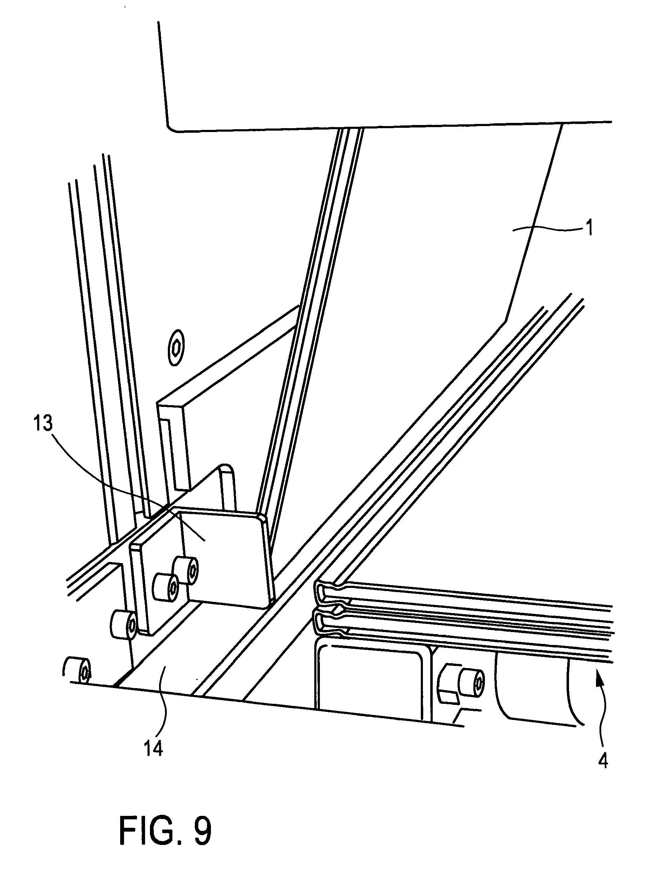

Fig. 9 zeigt schematisch und exemplarisch einen Teil der Objektablegeeinheit 5, insbesondere das Laufband 14 und den Anschlag 13. In der in Fig. 9 gezeigten Situation, ist ein Buch 1 durch das Laufband 14 und gehalten durch das Halteelement 10 in die Objektablegeeinheit 5 hinein bewegt worden bis das Buch 1 den Anschlag 13 berührt.

Die Stapelvorrichtung 2 weist des Weiteren eine Stapelbewegungseinheit 15 auf, die so angepasst ist, dass sie den Stapel 4 von dem Stapeltisch 3 wegbewegt, insbesondere wenn eine vorgegebene Stapelhöhe erreicht ist. In diesem Ausführungsbeispiel ist die Stapelbewegungseinheit 15 so angepasst, dass der Stapel 4 zu einer Verpackungseinheit 22 bewegt wird, an der der Stapel verpackt wird. Die Verpackungseinheit 22 kann angepasst sein, um einzelne Bücher des Stapels zu verpacken. Alternative oder zusätzlich kann die Verpackungseinheit angepasst sein, um den gesamten Stapel zu verpacken. In anderen Ausführungsformen kann anstelle oder zusätzlich zu der Verpackungseinheit eine Stapelverarbeitungseinheit verwendet werden, die eine andere Weiterbearbeitung der Bücher durchführt. In weiteren Ausführungsformen können die Verpackungseinheit und insbesondere auch die Stapelbewegungseinheit fehlen.

Die Stapelbewegungseinheit 15 weist ein Laufband 16, das auch als Speicherband bezeichnet werden kann, auf, mit dem der Stapel 14 zu einem Stapelwender 30 transportiert werden kann. Der Stapelwender 30 hält den kompletten Stapel zusammen und dreht ihn um 180°, das heißt, der Stapel wird sozusagen "auf den Kopf" gestellt. Hierdurch kann gewährleistet werden, dass die Reihenfolge der Bücher beispielsweise für ein späteres Abnehmen eingehalten wird. Wenn beispielsweise Bücher mit den Nummern 1 bis 3 nacheinander übereinander in der Reihenfolge ihrer Nummerierung gestapelt werden, so liegt das Buch mit der Nummer 1 unten und das Buch mit der Nummer 3 oben. Wenn in diesem Bespiel ein zweiter Stapel aus Büchern mit den Nummern 4 bis 6 gebildet wird, so liegt in diesem zweiten Stapel das Buch mit der Nummer 4 unten und das Buch mit der Nummer 6 oben. Wenn jetzt nacheinander die Bücher der beiden Stapel weiterverarbeitet, beispielsweise verpackt, werden, ohne die Stapel zu wenden, werden zuerst die Bücher des ersten Stapels in der Reihenfolge 3, 2, 1 und dann die Bücher des zweiten Stapels in der Reihenfolge 6, 5, 4 verarbeitet. Die Bücher würden also in der Reihenfolge 3, 2, 1, 6, 5 4 weiterverarbeitet. Wenn dagegen, wie in der vorliegenden Ausführungsform, die beiden Stapel um 180° gewendet werden, werden zuerst die Bücher des ersten Stapels in der Reihenfolge 1, 2, 3 und dann die Bücher des zweiten Stapels in der Reihenfolge 4, 5, 6 verarbeitet. Die Bücher werden also in der richtigen Reihenfolge 1, 2, 3, 4, 5, 6 weiterverarbeitet.

Der Stapelwender 30 beinhaltet zwei Transportbänder, wobei ein erstes Transportband den Stapel hereinführt und ein zweites Transportband den Stapel nach der 180°-Drehung wieder herausführt. Von dem Stapelwender 30 wird der Stapel weiter zu der Verpackungseinheit 22 über ein weiteres Transportband 31 transportiert.

Die Verpackungseinheit 22 ist beispielsweise eine Verpackungseinheit der Firma Kallfass.

Alternativ kann die Stapelvorrichtung auch keine Stapelbewegungseinheit und insbesondere keine Verpackungseinheit aufweisen oder die Stapelbewegungseinheit kann anders ausgebildet sein, um beispielsweise den Stapel auf eine andere Art und Weise zu einem Ort, an dem die Verpackungseinheit angeordnet ist, oder zu einem anderen Ort zu bewegen. So kann die Stapelbewegungseinheit beispielsweise mehr oder weniger Transportbänder, die anders angeordnet sein können, aufweisen. Zudem kann die Stapelbewegungseinheit verschiedene Stapelwender oder auch keinen Stapelwender aufweisen.

Bevorzugt weist die Stapelvorrichtung 2 des Weiteren einen Sensor auf, der an dem Ende der Objektbewegungseinheit 7 angeordnet ist, das der Objektablegeeinheit 5 zugewandt ist, so dass ein Buch 1 detektiert wird, unmittelbar bevor das Buch 1 die Objektablegeeinheit 5 erreicht. Dieser Sensor ist beispielsweise eine Lichtschranke, die unterbrochen wird, wenn ein Buch 1 zu der Objektablegeeinheit 5 bewegt worden ist. Wenn dieser Sensor ein Buch 1 detektiert, wird bevorzugt das Laufband 14 in Betrieb gesetzt, so dass das Buch 1 in die Objektablegeeinheit 5 gezogen wird, bis das Buch 1 den Anschlag 13 erreicht. Wenn die Erreichung des Anschlags 13 von dem Sensor 29 detektiert worden ist, stoppt das Laufband 14 und der Ablegevorgang beginnt. Das Laufband 14 weist bevorzugt einen Flachriemen auf.

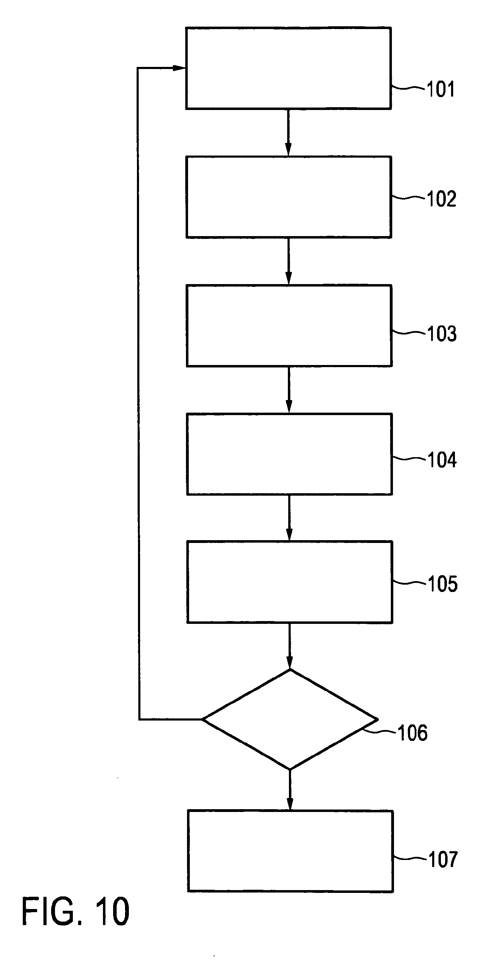

Im Folgenden wird exemplarisch eine Ausführungsform eines Stapelverfahrens zum Stapeln von Objekten, insbesondere von Büchern, unter Bezugnahme auf ein Flussdiagramm beschrieben, das in Fig. 10 gezeigt ist.

In Schritt 101 wird ein Buch 1 von der Objektbewegungseinheit 7 zu der Objektablageeinheit 5 bewegt. Dabei wird das Buch 1 von den Führungselementen 8 gehalten und mittels des Laufbands 9 bewegt. Die Führungselemente 8 halten das Buch 1 dabei in einer Stellung, in der das Buch 1 auf der Seitenkante 6 steht.

In Schritt 102, detektiert ein Sensor, dass das Buch 1 zu der Objekteinlegeeinheit 5 transportiert worden ist und das Laufband 14 der Objektablegeeinheit 5 wird in Betrieb gesetzt, so dass das Buch 1 mittels des Laufbandes 6 in die Objektablegeeinheit hineingezogen wird. Dabei wird das Buch 1 mittels des Halteelements 10 gehalten, so dass das Buch 1 auf der Seitenkante 6 stehend in die Objektablegeeinheit 5 gezogen wird. Diese Situation ist in Fig. 3 schematisch und exemplarisch dargestellt.

Wenn der Sensor 29 detektiert hat, dass das Buch 1 den Anschlag 13 erreicht hat, wird der Antrieb des Laufbandes 6 gestoppt und es wird überprüft, welches Format das Buch 1 aufweist. In dieser Ausführungsform wird hierzu eine Lichtschranke verwendet, die, wenn das Buch in eine erste Formatklasse einzuordnen ist, unterbrochen ist und die, wenn das Buch in eine zweite Formatklasse einzuordnen ist, nicht unterbrochen ist. Diese Situation ist schematisch und beispielhaft in Fig. 4 dargestellt.

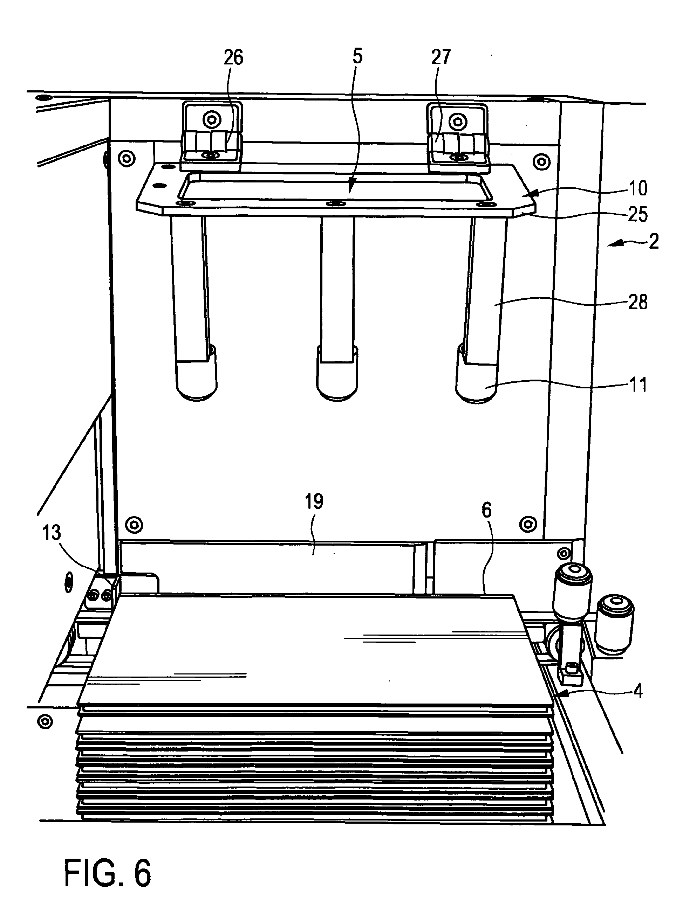

In Schritt 104 wird das Halteelement 10 von einer Haltestellung zu einer Freigabestellung bewegt und der Ablegearm 20 führt eine Vertikal- und Horizontalbewegung derart durch, dass das Buch 1 auf den Stapel 4 abgelegt wird. Die Horizontal- und/oder Vertikalbewegung des Ablegearms 20 hängt dabei von der in Schritt 103 ermittelten Formatklasse ab. Dieser Ablegevorgang ist beispielhaft und schematisch in den Figuren 5 und 6 dargestellt.

In Schritt 105 wird der Stapeltisch 3 derart abgesenkt, dass, nachdem das Buch 1 auf den Stapeltisch 3 oder auf bereits auf dem Stapeltisch 3 befindlichen Bücher abgelegt worden ist, die Höhe der Oberkante des Stapels gleich der Höhe der Oberkante des Stapeltisches oder des Stapels 4 ist, auf den das Buch 1 abgelegt worden ist, bevor dieses Buch 1 abgelegt worden ist. In diesem Ausführungsbeispiel wird der Stapeltisch 3 um die Dicke des zuletzt abgelegten Buches 1 nach unten bewegt.

In Schritt 106 wird ermittelt, ob der Stapel 4 eine vorgegebene Stapelhöhe erreicht hat. Ist dies der Fall, so wird in Schritt 107 der Stapel 4 aus der Objektablegeeinheit 5 hinausbewegt, beispielsweise zu der Verpackungseinheit 22 zum Verpacken des Stapels 4. Wenn dagegen die vorgebbare Stapelhöhe noch nicht erreicht ist, wird das Verfahren in Schritt 101 fortgeführt.

Da erfindungsgemäß Objekte unterschiedlicher Formate gestapelt werden können, ist es nicht notwendig die Stapelvorrichtung umzurüsten, wenn Objekte eines anderen Formats gestapelt werden sollen. Die erfindungsgemäße Stapelvorrichtung kann beispielsweise Objekte, die eine unterschiedliche Dicke, eine unterschiedliche Breite und/oder eine unterschiedliche Höhe aufweisen, insbesondere entsprechende Bücher, stapeln.

Erfindungsgemäß können Bücher unterschiedlicher Formate ausgerichtet zu einem Stapel übereinandergelegt werden. Die Bücher werden dabei im Wesentlichen nicht übereinandergeschoben, sondern jeweils aufrecht zum Stapel bzw. Stapeltisch bewegt und dann bevorzugt über eine Kante des Stapels bzw. eine Kante des Stapeltisches, die während des Ablegevorgangs immer die gleiche Höhe aufweist, mittels des Ablegearmes auf den Stapel gekippt und dadurch abgelegt.

In der oben beschriebenen Ausführungsform wurden Bücher gestapelt, insbesondere Fotobücher. In anderen Ausführungsformen können auch andere Objekte gestapelt werden, beispielsweise andere Datenträger wie CDs oder DVDs, insbesondere verpackte CDs oder DVDs.

Obwohl in der oben beschriebenen Ausführungsform die Stapelvorrichtung im Zusammenhang mit einer Buchfertigungseinheit und einer Verpackungseinheit beschrieben worden ist, kann in anderen Ausführungsformen die Stapelvorrichtung auch in Alleinstellung oder zusammen mit anderen Einheiten betrieben werden.

In den Ansprüchen schließen die Wörter "aufweisen" und "umfassen" nicht andere Elemente oder Schritte aus und der unbestimmte Artikel "ein" schließt eine Mehrzahl nicht aus.

Eine einzelne Einheit oder Vorrichtung kann die Funktionen mehrerer Elemente durchführen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte.

Die Steuerung der Stapelvorrichtung gemäß des Stapelverfahrens kann als Programmcode eines Computerprogramms und/oder als entsprechende Hardware implementiert sein und ist insbesondere eine speicherprogrammierbare Steuerung.

Ein Computerprogramm kann auf einem geeigneten Medium gespeichert und/oder verteilt werden, wie beispielsweise einem optischen Speichermedium oder einem Festkörperspeichermedium, das zusammen mit oder als Teil anderer Hardware vertrieben wird. Das Computerprogramm kann aber auch in anderen Formen vertrieben werden, beispielsweise über das Internet oder andere Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt ist.

## Patentansprüche

1. Stapelvorrichtung zum Stapeln von Objekten (1), insbesondere von Büchern (1), wobei die Stapelvorrichtung (2) aufweist:
- einen Stapeltisch (3) zum Aufnehmen eines Stapels (4) von Objekten (1),
- eine Objektablegeeinheit (5) zum Ablegen eines auf einer Seitenkante (6) stehenden Objekts (1) auf den Stapeltisch (3),
- eine Objektbewegungseinheit (7) zum Bewegen des Objektes (1) zu der Objektablegeeinheit (5),
**dadurch gekennzeichnet, dass** die Objektablegeeinheit (5) einen Ablegearm (20) aufweist, auf dem das Objekt (1) lagerbar ist, wobei die Objektablegeeinheit (5) so angepasst ist, dass der Ablegearm (20) in vertikaler und insbesondere in horizontaler Richtung derart bewegbar ist, dass das auf der Seitenkante stehende Objekt (1) zum Ablegen auf den Stapeltisch gekippt wird.

2. Stapelvorrichtung nach Anspruch 1, **dadurch gekennzeichnet, dass** die Objektablegeeinheit (5) so angepasst ist, dass das auf der Seitenkante stehende Objekt (1) um eine Kippachse, die durch die Seitenkante definiert ist oder parallel zu der Seitenkante verläuft, gekippt wird.

3. Stapelvorrichtung nach Anspruch 1 oder Anspruch 2, **dadurch gekennzeichnet, dass** der Stapeltisch (3) höhenverstellbar ist.

4. Stapelvorrichtung nach Anspruch 3, **dadurch gekennzeichnet, dass** die Stapelvorrichtung (2) einen Höhensensor (23, 24) zum Bestimmen der Stapelhöhe aufweist, wobei der Stapeltisch (3) derart höhenverstellbar ist, dass, nachdem ein Objekt (1) auf den Stapeltisch (3) oder auf bereits auf dem Stapeltisch (3) befindlichen Objekten abgelegt worden ist, die Höhe der Oberkante des Stapels gleich der Höhe der Oberkante des Stapeltisches oder des Stapels (4) ist, auf den das Objekt (1) abgelegt worden ist, bevor dieses Objekt (1) abgelegt worden ist.

5. Stapelvorrichtung nach Anspruch 4, **dadurch gekennzeichnet, dass** der Höhensensor eine Lichtschranke (23, 24) aufweist, die so angeordnet ist, dass, wenn die Höhe der Oberkante des Stapels ungleich der Höhe der Oberkante des Stapeltisches (3) oder des Stapels (4) ist, auf den das Objekt (1) abgelegt worden ist, bevor dieses Objekt (1) abgelegt worden ist, die Lichtschranke (23, 24) unterbrochen ist und dass, wenn die Höhe der Oberkante des Stapels gleich der Höhe der Oberkante des Stapeltisches (3) oder des Stapels (4) ist, auf den das Objekt (1) abgelegt worden ist, bevor dieses Objekt (1) abgelegt worden ist, die Lichtschranke (23, 24) nicht unterbrochen ist und dass die Stapelvorrichtung (2) so angepasst ist, dass, wenn die Lichtschranke (23, 24) unterbrochen ist, der Stapeltisch (3) nach unten bewegt wird, bis die Lichtschranke (23, 24) nicht mehr unterbrochen ist.

6. Stapelvorrichtung nach einem der vorhergehenden Ansprüche, **dadurch gekennzeichnet, dass** der Stapeltisch (3) eine Auflagefläche (17) für den Stapel (4) aufweist, die durch ein Laufband (18) gebildet ist, um den Stapel (4) aus der Stapelvorrichtung (2) zu bewegen.

7. Stapelvorrichtung nach einem der vorhergehenden Ansprüche, **dadurch gekennzeichnet, dass** die Objektbewegungseinheit (7) so angepasst ist, dass das Objekt (1) auf einer Seitenkante (6) stehend zu der Objektablegeeinheit (5) bewegbar ist.

8. Stapelvorrichtung nach einem der vorhergehenden Ansprüche, **dadurch gekennzeichnet, dass** die Objektablegeeinheit (5) ein Halteelement (10) zum Halten des stehenden Objekts (1) aufweist.

9. Stapelvorrichtung nach Anspruch 8, **dadurch gekennzeichnet, dass** das Halteelement (10) so angepasst ist, dass das Halteelement zwischen einer Haltestellung, in der das Objekt (1) auf einer Seitenkante (6) stehend haltbar ist, und einer Freigabestellung, in der das Objekt (1) zum Ablegen freigebbar ist, verstellbar ist.

10. Stapelvorrichtung nach Anspruch 1, **dadurch gekennzeichnet, dass** die Objektablegeeinheit (5) einen Objektformatsensor (23) zum Bestimmen eines Formats des Objekts (1) aufweist, wobei die Objektablegeeinheit (5) angepasst ist, den Ablegearm (20) in Abhängigkeit von dem bestimmten Format zu bewegen.

11. Stapelvorrichtung nach einem der vorhergehenden Ansprüche, **dadurch gekennzeichnet, dass** die Objektablegeeinheit (5) einen Anschlag (13) aufweist, der derart angeordnet ist, dass das Objekt (1) in die Objektablegeeinheit (5) führbar ist, bis das Objekt (1) den Anschlag (13) berührt.

12. Stapelvorrichtung nach Anspruch 11, **dadurch gekennzeichnet, dass** die Stapelvorrichtung (2) einen Sensor (29) zum Detektieren, ob ein Objekt (1) bis zum Anschlag (13) in die Objektablegeeinheit (5) geführt worden ist, aufweist.

13. Stapelvorrichtung nach einem der vorhergehenden Ansprüche, **dadurch gekennzeichnet, dass** die Objektablegeeinheit (5) ein Schiebeelement (19) zum Schieben des abgelegten Objekts (1) auf den Stapeltisch (3) aufweist, wobei das Schiebeelement (19) an der Seitenkante (6), auf der das Objekt (1) stand, anlegbar ist.

14. Stapelvorrichtung nach einem der vorhergehenden Ansprüche, **dadurch gekennzeichnet, dass** die Objektbewegungseinheit (7) derart angepasst ist, dass ein Buch (1) von einer Buchfertigungseinheit zu der Objektablegeeinheit (5) transportierbar ist.

15. Buchfertigungs- und -stapelvorrichtung, **dadurch gekennzeichnet, dass** die Buchfertigungs- und stapelvorrichtung eine Stapelvorrichtung nach Anspruch 1 aufweist.

16. Stapelverfahren zum Stapeln von Objekten, insbesondere von Büchern, wobei das Stapelverfahren folgenden Schritt aufweist:
- Bewegen eines Objekts zu einer Objektablegeeinheit,
**dadurch gekennzeichnet, dass** das Stapelverfahren zudem folgende Schritte aufweist:
- Lagern des Objekts, auf einer Seitenkante stehend, auf einem Ablegearm der Objektablegeeinheit,
- Bewegen des Ablegearms in vertikaler und insbesondere in horizontaler Richtung derart, dass das auf der Seitenkante stehende Objekt (1) zum Ablegen auf einen Stapeltisch gekippt wird.

17. Computerprogramm zum Stapeln von Objekten, **dadurch gekennzeichnet, dass** das Computerprogramm Programmcodemittel aufweist, die angepasst sind, eine Stapelvorrichtung gemäß Anspruch 1 derart zu steuern, dass das Stapelverfahren gemäß Anspruch 16 durchgeführt wird, wenn das Computerprogramm auf einem Computer durchgeführt wird, der die Stapelvorrichtung steuert.

## Claims

1. A stacking device for stacking objects (1), in particular books (1), wherein the stacking device (2) has:
- a stacking table (3) to receive a stack (4) of objects (1),
- an object depositing unit (5) for the depositing on the stacking table (3) of an object (1) standing on a lateral edge (6),
- an object moving unit (7) to move the object (1) to the object depositing unit (5),
**characterised in that** the object depositing unit (5) has a depositing arm (20) on which the object (1) can be supported, wherein the object depositing unit (5) is adapted in such a manner that the depositing arm (20) is movable in the vertical direction and in particular in the horizontal direction in such a manner that the object (1) standing on the lateral edge is tilted for depositing on the stacking table.

2. A stacking device according to claim 1, **characterised in that** the object depositing unit (5) is adapted in such a manner that the object (1) standing on the lateral edge is tilted about a tilting axis which is defined by the lateral edge or runs parallel to the lateral edge.

3. A stacking device according to claim 1 or claim 2, **characterised in that** the stacking table (3) is vertically adjustable.

4. A stacking device according to claim 3, **characterised in that** the stacking device (2) has a height sensor (23, 24) to determine the stack height, wherein the stacking table (3) is vertically adjustable in such a manner that after an object (1) has been deposited on the stacking table (3) or on objects already located on the stacking table (3), the height of the upper surface of the stack is equal to the height before this object (1) has been deposited of the upper surface of the stacking table or of the stack (4) on which the object (1) has been deposited.

5. A stacking device according to claim 4, **characterised in that** the height sensor has a light barrier (23, 24) arranged in such a manner that the light barrier (23, 24) is broken when the height of the upper surface of the stack is different from the height before the object (1) has been deposited of the upper surface of the stacking table (3) or of the stack (4) on which the object (1) has been deposited, and **in that** the light barrier (23, 24) is not broken when the height of the upper surface of the stack is equal to the height before the object (1) has been deposited of the upper surface of the stacking table (3) or of the stack (4) on which the object (1) has been deposited, and **in that** the stacking device (2) is adapted in such a manner that when the light barrier (23, 24) is broken, the stacking table (3) is moved downwards until the light barrier (23, 24) is no longer broken.

6. A stacking device according to any one of the preceding claims, **characterised in that** the stacking table (3) has a bearing surface (17) for the stack (4), which bearing surface (17) is formed by a conveyor belt (18) in order to move the stack (4) from the stacking device (2).

7. A stacking device according to any one of the preceding claims, **characterised in that** the object moving unit (7) is adapted in such a manner that the object (1), standing on a lateral edge (6), is movable to the object depositing unit (5).

8. A stacking device according to any one of the preceding claims, **characterised in that** the object depositing unit (5) has a holding element (10) to hold the upright object (1).

9. A stacking device according to claim 8, **characterised in that** the holding element (10) is adapted in such a manner that the holding element is adjustable between a holding position in which the object (1) can be held so as to stand on a lateral edge (6) and a release position in which the object (1) can be released for depositing.

10. A stacking device according to claim 1, **characterised in that** the object depositing unit (5) has an object size sensor (23) to determine a size of the object (1), wherein the object depositing unit (5) is adapted to move the depositing arm (20) dependent on the specific size.

11. A stacking device according to any one of the preceding claims, **characterised in that** the object depositing unit (5) has a stop (13) arranged in such a manner that the object (1) can be guided into the object depositing unit (5) until the object (1) contacts the stop (13).

12. A stacking device according to claim 11, **characterised in that** the stacking device (2) has a sensor (29) to detect whether an object (1) has been guided into the object depositing unit (5) as far as the stop (13).

13. A stacking device according to any one of the preceding claims, **characterised in that** the object depositing unit (5) has a pushing element (19) to push the deposited object (1) onto the stacking table (3), wherein the pushing element (19) is placeable against the lateral edge (6) on which the object (1) stands.

14. A stacking device according to any one of the preceding claims, **characterised in that** the object moving unit (7) is adapted in such a manner that a book (1) can be transported from a book manufacturing unit to the object depositing unit (5).

15. A book manufacturing and stacking device, **characterised in that** the book manufacturing and stacking device has a stacking device according to claim 1.

16. A stacking method for stacking objects, in particular books, wherein the stacking method has the following step:
- movement of an object to an object depositing unit,
**characterised in that** the stacking method has moreover the following steps:
- supporting of the object, which is standing on a lateral edge, on a depositing arm of the object depositing unit,
- movement of the depositing arm in a vertical and in particular in a horizontal direction in such a manner that the object (1) standing on the lateral edge is tilted for depositing on a stacking table.

17. A computer program for stacking objects, **characterised in that** the computer program has program code means which are adapted to control a stacking device according to claim 1 in such a manner that the stacking method according to claim 16 is carried out when the computer program is carried out on a computer controlling the stacking device.

## Revendications

1. Dispositif d'empilage destiné à empiler des objets (1), en particulier des livres (1), dans lequel le dispositif d'empilage (2) comporte:
- une table d'empilage (3) destinée à recevoir une pile (4) d'objets (1),
- une unité de dépôt d'objet (5) destinée à déposer un objet (1) dressé sur un côté latéral (6) sur la table d'empilage (3),
- une unité de déplacement d'objet (7) destinée à déplacer l'objet (1) vers l'unité de dépôt d'objet (5),
**caractérisé en ce que** l'unité de dépôt d'objet (5) présente un bras de dépôt (20), sur lequel l'objet (1) peut être posé, dans lequel l'unité de dépôt d'objet (5) est adaptée de telle manière que le bras de dépôt (20) soit mobile en direction verticale et en particulier en direction horizontale, de telle manière que l'objet (1) dressé sur le côté latéral soit basculé pour le dépôt sur la table d'empilage.

2. Dispositif d'empilage selon la revendication 1, **caractérisé en ce que** l'unité de dépôt d'objet (5) est adaptée de telle manière que l'objet (1) dressé sur le côté latéral soit basculé autour d'un axe de basculement, qui est défini par le côté latéral ou qui s'étend parallèlement au côté latéral.

3. Dispositif d'empilage selon la revendication 1 ou la revendication 2, **caractérisé en ce que** la table d'empilage (3) est réglable en hauteur.

4. Dispositif d'empilage selon la revendication 3, **caractérisé en ce que** le dispositif d'empilage (2) présente un détecteur de hauteur (23, 24) destiné à déterminer la hauteur d'empilage, dans lequel la table d'empilage (3) est réglable en hauteur, de telle manière que, après qu'un objet (1) ait été déposé sur la table d'empilage (3) ou sur des objets se trouvant déjà sur la table d'empilage (3), la hauteur du côté supérieur de la pile soit égale à la hauteur du côté supérieur de la table d'empilage ou de la pile (4), sur laquelle l'objet (1) a été déposé, avant que cet objet (1) ait été déposé.

5. Dispositif d'empilage selon la revendication 4, **caractérisé en ce que** le détecteur de hauteur présente une barrière lumineuse (23, 24), qui est disposée de telle manière que, lorsque la hauteur du côté supérieur de la pile n'est pas égale à la hauteur du côté supérieur de la table d'empilage (3) ou de la pile (4), sur laquelle l'objet (1) a été déposé, avant que cet objet (1) ait été déposé, la barrière lumineuse (23, 24) soit interrompue et que, lorsque la hauteur du côté supérieur de la pile est égale à la hauteur du côté supérieur de la table d'empilage (3) ou de la pile (4), sur laquelle l'objet (1) a été déposé, avant que cet objet (1) ait été déposé, la barrière lumineuse (23, 24) ne soit pas interrompue, et **en ce que** le dispositif d'empilage (2) est adapté de telle manière que, lorsque la barrière lumineuse (23, 24) est interrompue, la table d'empilage (3) soit déplacée vers le bas, jusqu'à ce que la barrière lumineuse (23, 24) ne soit plus interrompue.

6. Dispositif d'empilage selon l'une quelconque des revendications précédentes, **caractérisé en ce que** la table d'empilage (3) présente une surface de dépôt (17) pour la pile (4), qui est formée par une bande mobile (18) destinée à déplacer la pile (4) hors du dispositif d'empilage (2).

7. Dispositif d'empilage selon l'une quelconque des revendications précédentes, **caractérisé en ce que** l'unité de déplacement d'objet (7) est adaptée de telle manière que l'objet (1) peut être déplacé vers l'unité de dépôt d'objet (5) en étant dressé sur un côté latéral (6).

8. Dispositif d'empilage selon l'une quelconque des revendications précédentes, **caractérisé en ce que** l'unité de dépôt d'objet (5) présente un élément de retenue (10) destiné à maintenir l'objet dressé (1).

9. Dispositif d'empilage selon la revendication 8, **caractérisé en ce que** l'élément de retenue (10) est adapté de telle manière que l'élément de retenue soit déplaçable entre une position de retenue, dans laquelle l'objet (1) peut être maintenu en étant dressé sur un côté latéral (6), et une position de libération, dans laquelle l'objet (1) peut être libéré pour être déposé.

10. Dispositif d'empilage selon la revendication 1, **caractérisé en ce que** l'unité de dépôt d'objet (5) présente un détecteur de format d'objet (23) destiné à déterminer un format de l'objet (1), dans lequel l'unité de dépôt d'objet (5) est adaptée pour déplacer le bras de dépôt (20) en fonction du format déterminé.

11. Dispositif d'empilage selon l'une quelconque des revendications précédentes, **caractérisé en ce que** l'unité de dépôt d'objet (5) présente une butée (13), qui est disposée de telle manière que l'objet (1) puisse être guidé dans l'unité de dépôt d'objet (5) jusqu'à ce que l'objet (1) touche la butée (13).

12. Dispositif d'empilage selon la revendication 11, **caractérisé en ce que** le dispositif d'empilage (2) présente un détecteur (29), destiné à détecter si un objet (1) a été guidé jusqu'à la butée (13) dans l'unité de dépôt d'objet (5).

13. Dispositif d'empilage selon l'une quelconque des revendications précédentes, **caractérisé en ce que** l'unité de dépôt d'objet (5) présente un élément de poussée (19) destiné à pousser l'objet déposé (1) sur la table d'empilage (3), dans lequel l'élément de poussée (19) peut être appliqué sur le côté latéral (6) sur lequel l'objet (1) était dressé.

14. Dispositif d'empilage selon l'une quelconque des revendications précédentes, **caractérisé en ce que** l'unité de déplacement d'objet (7) est adaptée de telle manière qu'un livre (1) puisse être transporté d'une unité de fabrication de livre à l'unité de dépôt d'objet (5).

15. 5 Dispositif de fabrication et d'empilage de livres, **caractérisé en ce que** le dispositif de fabrication et d'empilage de livres présente un dispositif d'empilage selon la revendication 1.

16. Procédé d'empilage destiné à empiler des objets, en particulier des livres, dans lequel le procédé d'empilage comprend l'étape suivante:
- déplacer un objet vers une unité de dépôt d'objet,
**caractérisé en ce que** le procédé d'empilage comprend en outre les étapes suivantes:
- poser l'objet, dressé sur un côté latéral, sur un bras de dépôt de l'unité de dépôt d'objet,
- déplacer le bras de dépôt en direction verticale et en particulier en direction horizontale, de telle manière que l'objet (1) dressé sur le côté latéral soit basculé pour le dépôt sur une table d'empilage.

17. Programme informatique destiné à l'empilage d'objets, **caractérisé en ce que** le programme informatique présente des moyens de code de programme, qui sont adaptés pour commander un dispositif d'empilage selon la revendication 1, de telle manière que le procédé d'empilage selon la revendication 16 soit mis en oeuvre, lorsque le programme informatique est exécuté sur un ordinateur qui commande le dispositif d'empilage.
